# EUROPEAN PATENT SPECIFICATION

(11) **EP 1 006 295 B1**
(45) Date of publication and mention of the grant of the patent: **11.02.2004**
(21) Application number: 99122049.2
(22) Date of filing: 15.11.1999
(51) Int. Cl.: F16H 57/08

(54) **Monolithic spider for epicyclic reduction unit**
Einstückiger Planetenträger für ein Planeten-Untersetzungsgetriebe
Porte-satellites en une seule pièce pour un réducteur planétaire

(30) Priority: 30.11.1998 IT BO980673
(43) Date of publication of application: 07.06.2000
(73) Proprietor: Brevini Riduttori S.p.A., 42100 Reggio Emilia (IT)
(72) Inventor: Paroli, Nazzaro, 42020 Quattro Castella (IT)
(74) Representative: Modiano, Guido, Dr.-Ing.

(56) References cited:
- DE-A- 19 608 134
- US-A- 3 154 970
- US-A- 4 415 378
- PATENT ABSTRACTS OF JAPAN vol. 007, no. 173 (M-232), 30 July 1983 (1983-07-30) & JP 58 077952 A (MITSUBISHI DENKI KK), 11 May 1983 (1983-05-11)

## Description

The present invention relates to a monolithic spider for an epicyclic reduction unit.

Epicyclic or sun-and-planet reduction units are known in which reduction of the rpm rate between the input or driving shaft and the output or driven shaft is achieved by means of a gear system with a plurality of reduction stages, each of which is substantially composed of a central pinion which meshes with a set of three planetary gears which are rotatably supported on respective pivots which cantilever out from a flange which is known as spider.

The planetary gears are supported on the pivots by means of smooth or rolling bearings which are composed of two concentric rings which form the tracks for the travel of the rolling bodies (rollers or balls) of the bearings. In the case of rolling bearings, in order to increase the load-bearing capacity of the pivots and therefore their resistance to the mechanical stresses that occur during operating conditions without increasing the external dimensions of the bearings, it is already known to eliminate the internal contrast ring of the bearing and to provide a suitable treatment of the outer surface of the pivots in order to make it more suitable to withstand the wear of the rolling bodies.

This treatment is currently performed on pivots which are separate from the spider and are therefore fixed to the flange of the spider after the treatment has been completed.

Accordingly, although this solution allows to achieve stronger pivots, it requires a more complicated and expensive process and necessarily entails operations for fitting the pivots to the flange, with additional burdens in terms of materials and machining such as the provision of holes in the spider flange, threaded tangs on the pivots which are adapted to be inserted in the seating holes of the flange and are fixed by means of nuts and washers and treatments for finishing the various parts.

JP 58 077952 A discloses a spider as defined in the preamble of claim 1.

The aim of the present invention is to obviate the above-cited drawbacks of conventional devices, i.e., to provide a monolithic spider for an epicyclic reduction unit which allows to obtain a structure which is simple and has a small number of parts that are subject to wear.

Within the scope of this aim, an object of the present invention is to achieve the above aim with a structure which is simple, relatively easy to provide in practice, safe in use, effective in operation and has a relatively low cost.

This aim, this object and others which will become apparent hereinafter are achieved by the spider for an epicyclic reduction unit according to the present invention, as defined in claim 1.

Further characteristics and advantages of the present invention will become apparent from the following detailed description of a preferred but not exclusive embodiment of a monolithic spider for an epicyclic reduction unit, illustrated only by way of non-limitative example in the accompanying drawings, wherein:
Figure 1 is a sectional view of an epicyclic reduction unit on which a spider according to the present invention is fitted;
Figure 2 is a front view of the spider;
Figure 3 is a side view of the spider;
Figure 4 is a sectional view of the pivot after treatment.
In order to better clarify the subject of the invention, reference is made to an epicyclic reduction unit which has a conventional structure, is generally designated by the reference numeral 1 and comprises two reduction stages 2 and 3 which are interposed between a shaft 4, which is for example the input shaft, and a shaft 5, which is for example the output shaft.

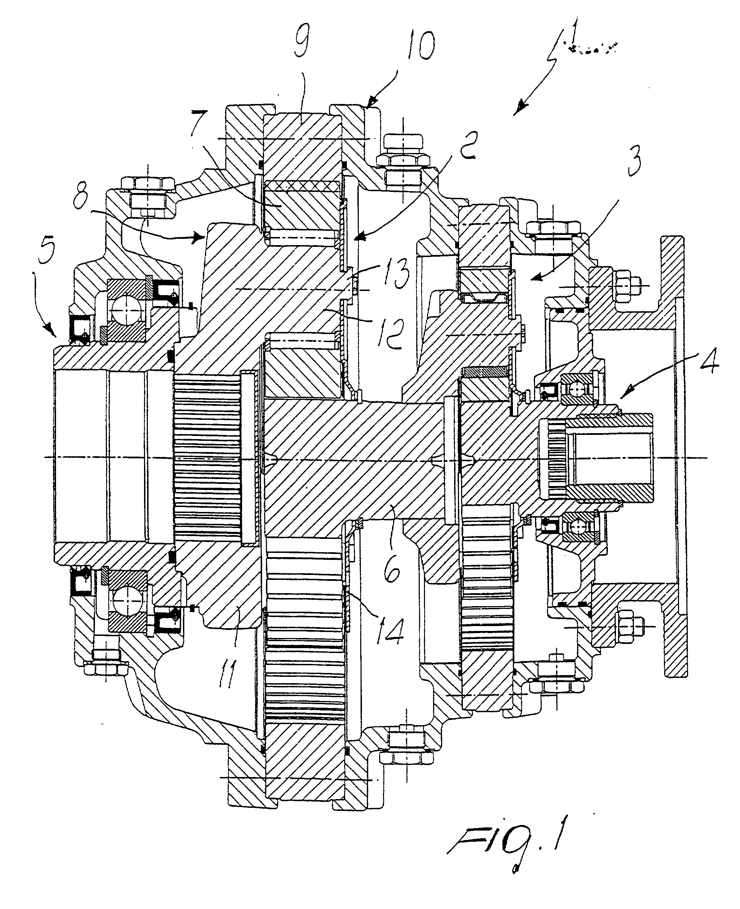

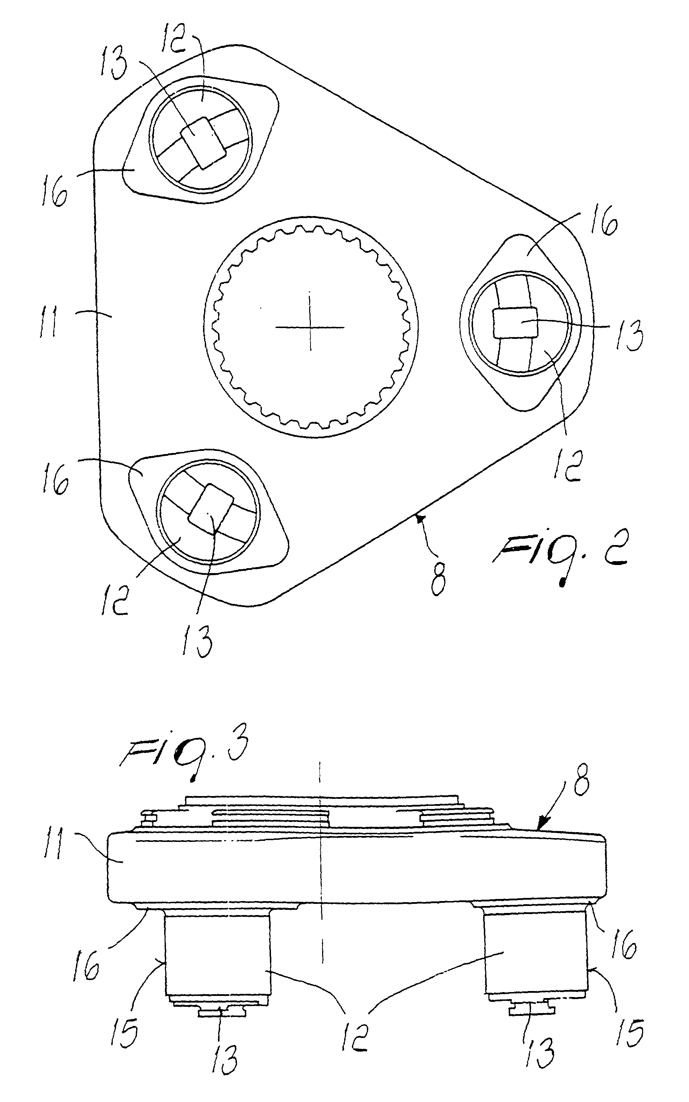

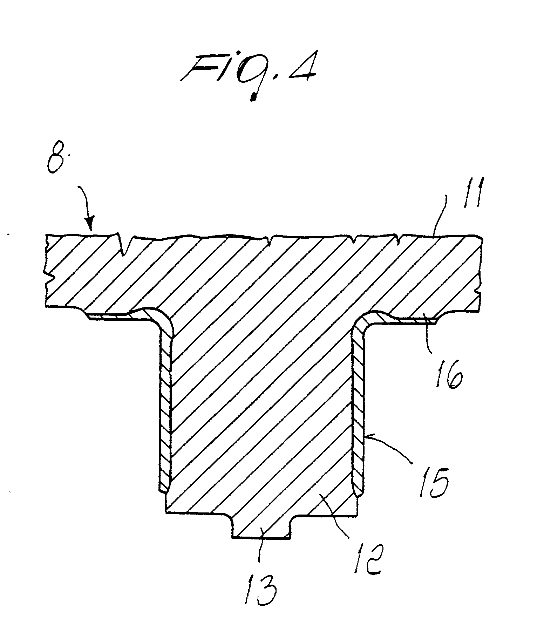

Each stage 2 and 3 is composed of a central pinion 6 (the reference numerals designate only the parts of the stage 2), on which a set of three planetary gears 7 is engaged; the planetary gears are supported by a spider 8 and mesh with a ring gear 9 which is rigidly coupled to a casing 10 of the reduction unit.

The spider 8 is formed by a flange 11 at the center of which the shaft 5 is rotationally coupled and from which three pivots 12 cantilever out; the pivots are formed monolithically with the flange 11 and the planetary gears 7 are fitted thereon. The free end of each pivot 12 is provided with mushroom-shaped elements 13 which are adapted to keep a plate 14 for retaining the planetary gears 7 rigidly coupled to the pivots 12.

The cylindrical surface 15 of the pivots 12 has, to a depth which preferably but not exclusively varies between 2 and 4 mm, increased hardness and strength characteristics with respect to the inner core of the pivots. Such characteristics can be achieved by means of an induction hardening treatment.

Advantageously, the hardening treatment also affects a region which surrounds the pivots 12 and affects an annular raised portion 16 which protrudes from the face of the flange 11.

As clearly shown, the spider according to the invention fully achieves the intended aim and object. The pivots, once they have been subjected to a surface hardening treatment, in fact offer a perfect rolling track for rolling bodies, which can fully replace the inner ring of conventional bearings. The surface treatment allows to preserve the characteristics of internal toughness and consequent resistance to mechanical stresses of the pivots.

In the practical embodiment of the invention, the hardening methods may vary according to requirements. Thus, for example, in addition to known induction hardening methods it is possible to use casehardening or carbonitriding.

The disclosures in Italian Patent Application No. BO98A000673 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A spider (8) for an epicyclic reduction unit (1), provided with planetary gear supporting pivots (12) which protrude from a flange (11), wherein said pivots are monolithic with said flange, **characterised in that** each pivot (12) has a surface for the rolling of rolling bodies of bearings for supporting a planetary gear, and **in that** said surface has an increased level of hardness achieved by a thermal treatment for surface hardening, and **in that** said thermal treatment affects a region on said flange (11) that surrounds each pivot (12) including an annular raised portion (16) which protrudes from a face of said flange (11).

2. The spider according to claim 1, **characterized in that** said thermal treatment for surface hardening is an induction treatment.

3. The spider according to claim 1, wherein said thermal treatment for surface hardening affects a surface region which has a depth of 2 to 4 mm.

## Patentansprüche

1. Planetenradträger (8) für eine Planetenuntersetzungseinheit (1), der mit Planetenrad-Lagerzapfen (12) versehen ist, die von einem Flansch (11) abstehen, wobei die Zapfen einstückig mit dem Flansch sind, **dadurch gekennzeichnet, dass** jeder Zapfen (12) eine Oberfläche zum Walzen von Wälzkörpern der Lager hat, die ein Planetenrad lagern, und dass die Oberfläche einen erhöhten Härtegrad besitzt, der durch eine Wärmebehandlung zum Oberflächenhärten erreicht wird, und dass die Wärmebehandlung auf einen Bereich auf dem Flansch (11) wirkt, der jeden Zapfen (12) einschließlich eines ringförmigen erhabenen Teils (16) umgibt, der von einer Fläche des Flansches (11) absteht.

2. Planetenradträger nach Anspruch 1, **dadurch gekennzeichnet, dass** die Wärmebehandlung zum Oberflächenhärten eine Induktionsbehandlung ist.

3. Planetenradträger nach Anspruch 1, wobei die Wärmebehandlung zum Oberflächenhärten auf einen Oberflächenbereich wirkt, der eine Tiefe von 2 bis 4 mm hat.

## Revendications

1. Croisillon (8) pour réducteur épicycloïdal (1), muni de pivots de support d'engrenages planétaires (12) qui font saillie depuis un flasque (11), dans lequel lesdits pivots forment un ensemble monolithique avec ledit flasque, **caractérisé en ce que** chaque pivot (12) a une surface pour le roulement d'éléments roulants de roulements pour supporter un engrenage planétaire, et **en ce que** ladite surface a un niveau accru de dureté obtenu par un traitement thermique de durcissement superficiel, et **en ce que** ledit traitement thermique affecte une région sur ledit flasque (11) qui entoure chaque pivot (12) comprenant une partie annulaire surélevée (16) qui fait saillie depuis une face dudit flasque (11).

2. Croisillon selon la revendication 1, **caractérisé en ce que** le traitement thermique de durcissement superficiel est un traitement par induction.

3. Croisillon selon la revendication 1, dans lequel ledit traitement thermique de durcissement superficiel affecte une région superficielle qui a une profondeur de 2 mm à 4 mm.
